# EUROPEAN PATENT SPECIFICATION

(11) **EP 3 463 953 B1**
(45) Date of publication and mention of the grant of the patent: **06.11.2019**
(21) Application number: 17717891.0
(22) Date of filing: 29.03.2017
(51) Int. Cl.: B60J 10/18, B60J 10/21, B60J 10/70

(54) **POLYMER PROFILE FRAME FOR VEHICLE WINDOW UNIT**
POLYMERPROFILRAHMEN FÜR EINE FAHRZEUGFENSTEREINHEIT
STRUCTURE DE PROFIL DE POLYMÈRE POUR UNITÉ DE FENÊTRE DE VÉHICULE

(30) Priority: 07.06.2016 GB 201609946
(43) Date of publication of application: 10.04.2019
(73) Proprietor: Central Glass Company, Limited, Yamaguchi 755-0001 (JP)
(72) Inventor: SABRA, Issam, Grevenmacher 6776 (LU)
(74) Representative: Mewburn Ellis LLP
(86) International application number: PCT/JP2017/012831
(87) International publication number: WO 2017/212749

(56) References cited:
- FR-A1- 2 898 181
- US-B2- 6 513 854

## Description

### TECHNICAL FIELD

The invention relates to a polymer frame or profile frame to be attached to an edge portion of a vehicle window, and to a vehicle window unit comprising such a profile frame attached to a glass window substrate.

### BACKGROUND OF THE INVENTION

In many cases, fixed sash windows installed in vehicles have a polymer frame at the edge portion of the window. The polymer frame has a flexible lip or a fastener extending out from and alongside a base portion of the polymer frame. The flexible lip or the fastener provides a water-sealing structure to a fixed sash window when installed in a vehicle.

JP examined utility model publication H07-50250 Y2 discloses a bendable polymer profile frame with a fastener having a metal wire inserted into a hole within the bottom portion of the fastener so as to extend in longitudinal direction of the fastener. US Patent 6,513,854 discloses a polymer profile frame with a lip. The frame comprises a bend portion that may be applied to a corner portion of a window. The bend portion comprises a V-shaped notch area that allows the frame to easily fit to the corner portion.

### SUMMARY OF THE INVENTION

The polymer profile frame disclosed in US Patent 6,513,854 has disadvantages for fitting the frame to a corner portion of a window. The V-shaped notch area is formed so as to extend completely through the base portion of the frame and part-way through the lip. Thus, a residual lip portion of the bend portion then becomes narrow. Since the lip is required to be of a soft material, to provide a waterproof structure in a window unit installed in a vehicle, the bend portion is liable to tearing while handling the frame. In addition, shrinkage of the profile material can generate through aging of the glass unit, again resulting in tearing at the bend portion.

It is an aim herein to provide a new and useful polymer profile frame for vehicle window units, especially in view of the drawbacks mentioned above.

According to one aspect of the present invention as set out in claim 1, there is provided a polymer profile frame for a vehicle window unit, comprising:
a base portion,
a flexible lip extending along and out from the base portion, and
at least one bend portion to be applied to a corner portion of a window substrate,
wherein the bend portion has a V-shaped notch formed so as to completely through the base portion and part-way through the flexible lip, thereby leaving a residual lip portion adjacent the notch ("residual lip portion adjacent the notch" is expressed simply as "residual lip portion" below),
wherein the residual lip portion comprises a flexible linear member integrally molded within the residual lip portion.

According to a second aspect of the invention (claim 9) there is provided a vehicle window unit, comprising a glass substrate and a polymer profile frame as defined herein applied on an edge portion of the glass substrate which has at least one corner portion, the at least one bend portion thereof being applied to the corner portion of the glass substrate.

A further aspect of the invention (claim 11) is a method of making such a window unit comprising attaching the profile frame along the edge of the glass substrate, preferably by adhesive, aligning the notch area with a corner portion of the substrate and closing the V-shaped notch together at the corner portion for the profile frame to conform to the edge of the glass substrate.

### ADVANTAGEOUS EFFECTS OF THE INVENTION

By the frame having the above structure, tearing at the bend portion can be prevented while the frame is handled. In the glass unit, tearing at the bend portion can be prevented even when shrinkage of the profile material arises through aging of the glass unit.

### BRIEF DESCRIPTION OF THE DRAWINGS

Fig. 1 is a schematic view showing a main part of a polymer profile frame embodying the present invention;
Fig. 2 is a cross-section of Fig. 1 at A-A;
Fig. 3 is a view similar to Fig. 2, but showing another embodiment of polymer profile frame in the present invention;
Fig. 4 is a schematic view showing part of a vehicle window unit embodying the invention;
Fig. 5 is a cross-section at B-B of Fig. 4, showing the frame of Fig. 2;
Fig. 6 is a view similar to Fig. 5, but showing the frame of Fig. 3; and
Fig. 7 is a view similar to Fig. 1, but showing a main part of another embodiment of polymer profile frame.

### DETAILED DESCRIPTION

In the following description, for purposes of explanation and not limitation, specific details are set forth in order to provide understanding of certain embodiments of the present invention. However, it will be apparent to those skilled in the art that the present invention may be practiced in other embodiments that depart from these specific details. In other instances, detailed descriptions of well-known devices, processes, techniques, and methods are omitted so as to not obscure the description with unnecessary details. We refer now more particularly to the accompanying drawings, in which like reference numerals indicate like parts/elements throughout several views.

For better understanding of the present invention, the present invention is described using figures.

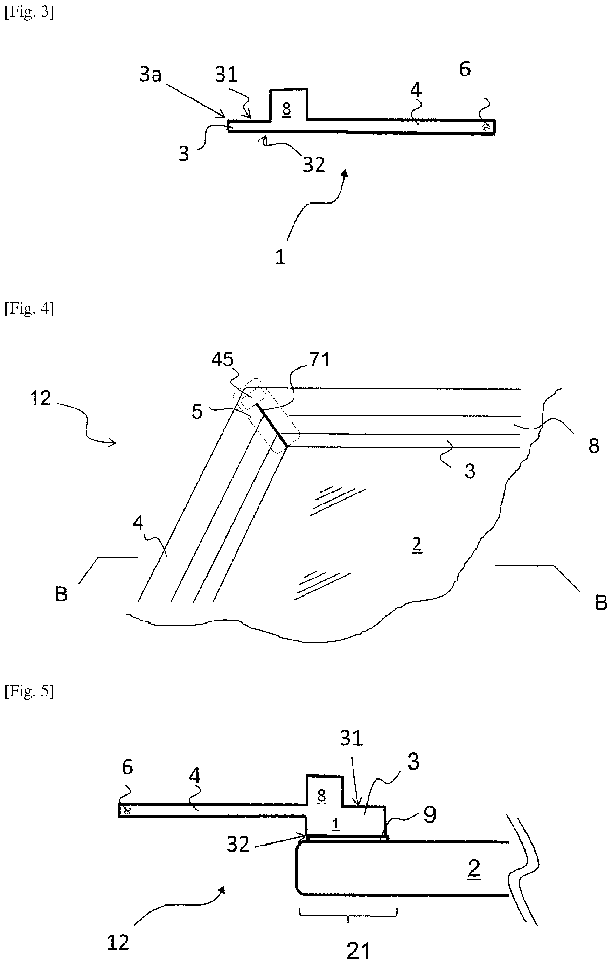

In accordance with typical embodiments of the present invention, a polymer profile frame 1 is formed via extrusion (the term"extrusion" as used herein includes both extrusion and coextrusion). Following extrusion, the profile frame 1 may be stored, may be cut into units of a select length, may be trimmed, may be allowed to cure (fully or partially), and so forth in accordance with established knowledge. Thereafter, the profile frame 1 is applied and attached to a surface(s) extending along an edge portion 21 of a window (same as glass substrate 2) along at least two consecutive sides thereof and at least one corner portion between the sides, resulting in vehicle window unit 12 (see Figs. 4-6).

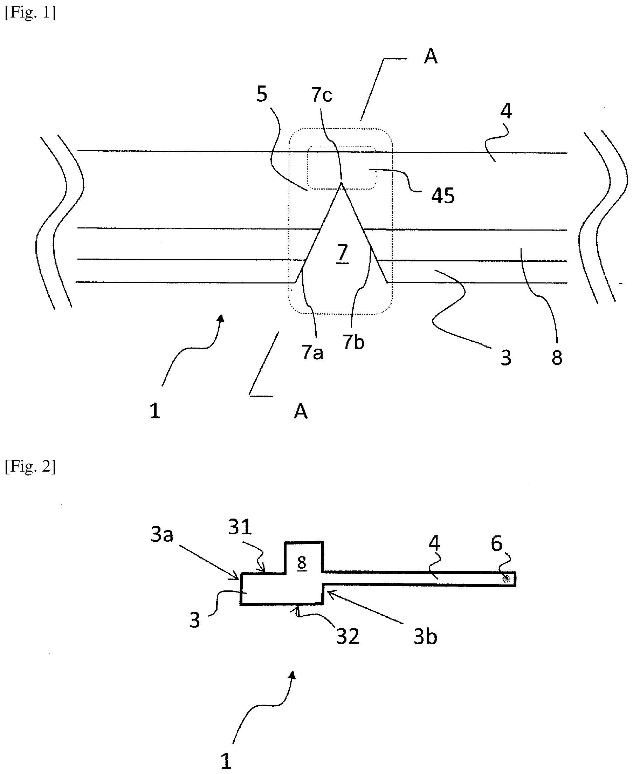

The polymer profile frame 1 comprises, in terms of cross-section shown in Fig. 2 or Fig. 3, a base portion 3 and a flexible lip 4 extending alongside and outwardly from the base portion 3. In terms of the longitudinal features, the profile frame also has at least one bend portion 5 (see Fig. 1). Each bend portion 5 is adapted to be applied to a corresponding corner portion of the glass substrate or window, forming a closed notch 71 at the bend portion 5 as shown in Fig. 4. When the window unit 12 is installed in vehicle into a fixed sash window, the flexible lip 4 can provide a water-sealing structure for the fixed sash window. In a typical construction, the base portion 3 has a flat undersurface region for attaching to the surface of the glass substrate, directly or indirectly, usually by adhesive means such as adhesive or double-sided tape applied thereto. The flexible lip 4 can project out from the base portion 3 beyond the edge of the glass substrate that may be generally parallel to the substrate surface, when the profile frame is attached thereto, to engage and seal against an adjacent component of the vehicle.

A soft polymer material is preferably used as the material of the base portion 3, the flexible lip 4 and the bend portion 5. As examples of the soft polymer material, there can be mentioned thermoplastic rubbers (TPR), thermoplastic urethanes, thermoplastic olefins (TPO), thermoplastic elastomers (TPE), ethylene-propylene-diene monomer rubbers (EPDM), polyvinyl chloride (PVC), etc. The same material may be used to form the base portion 3, the flexible lip 4 and the bend portion 5.

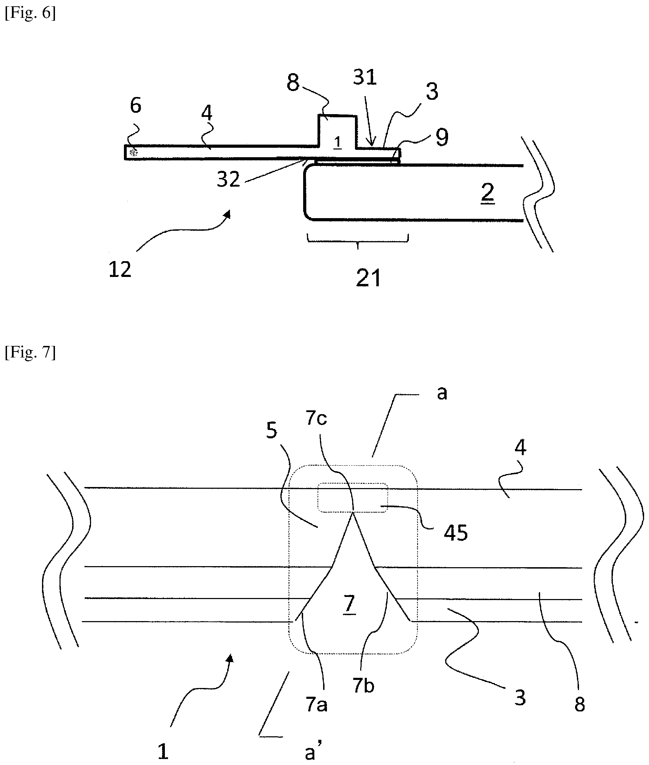

The thickness i.e. the distance from a first (e.g. upper) main surface 31 to a second (e.g. lower) main surface 32 of the base portion 3 may be e.g. from 1 mm to 7 mm (see Figs. 2, 3). The width i.e. the distance from one side (inner side) 3a to the other side 3b (outer side) of the base portion 3 may be e.g. from 4 mm to 12 mm. The thickness of the flexible lip 4 may be e.g. from 0.7 mm to 1.5 mm. The width or projection extent of the flexible lip 4 may be e.g. from 5 mm to 10 mm. In the case that there is no clear boundary between the base portion 3 and flexible lip 4, such as in the case of Fig. 3 or Fig. 6, the width of the base portion 3 and the lip 4 combined can be considered. This combined width may be e.g. from 8 mm to 22 mm. The numerical values may be determined depending on the vehicle and window shape.

The base portion 3 comprises the first main surface 31 and the second main surface 32. The base portion may comprise an upstanding rib 8 disposed on the first main surface 31 and extending along the base portion 3, to reinforce the base portion 3. The thickness of the rib 8 may be e.g. from 2 mm to 6 mm, and the width of the rib 8 may be e.g. from 1 mm to 6 mm. The numerical values may be determined depending on vehicle shape. As a material of the rib 8, TPR, thermoplastic urethane, TPO, TPE, EPDM, PVC etc. can be used. The same material may be used to form the base portion 3 and the rib 8.

The profile frame 1 may be adhered to the glass substrate 2 through an adhesion layer 9 (see Figs. 5, 6) between the glass substrate 2 and the second main surface 32 of the base portion 3 of the profile frame 1. In other words, the second main surface 32 can be or provide an adhesion layer-receiving area. It is preferred that the profile frame 1 is adhered to the glass substrate 2 after an adhesion layer 9 is formed on the second main surface 32. The adhesion layer 9 may be e.g. a double-sided adhesive tape, a glue such as thermo-reactive glue, etc. in accordance with the skilled person's knowledge.

The bend portion 5 comprises (see Fig. 1) a V-shaped notch 7, a residual lip portion 45 immediately outside the notch 7, and a flexible linear member 6 (see Figs. 2, 3) integrally molded within the residual lip portion 45. The profile frame 1 is cut (but not all the way across or through the profile) from the inner side 3a of the base portion 3 (see Figs. 2, 3) so as to form the V-shaped notch 7. The V-angle of the notch 7 may be adjusted depending on the angle of the corner portion(s) of the glass substrate 2 First and second surfaces 7a, 7b defining the V-shape of the notch 7 may respectively and entirely extend straight from their nodal line 7c, as shown in Fig. 1. More preferably, these first and second surfaces 7a, 7b may respectively extend straight from their nodal line 7c and then respectively outwardly flex at the boundary between the base portion 3 or rib 8 and flexible lip 4, as shown in Fig. 7. Applying a polymer profile frame 1 having such structure to a glass substrate 2, a tension can generate at the residual lip area 45 and this may improve a water-sealing property of the structure of the fixed sash window (vehicle window unit 12) installed in a vehicle.

The flexible linear member 6 may be integrally molded within the residual lip portion 45 along the edge of the flexible lip 4. The flexible linear member 6 may be molded-in when the polymer profile frame 1 is formed via extrusion. Preferably the flexible linear member 6 is integrally molded within the edge portion of the lip so as to extend in the longitudinal direction of the flexible lip 4, i.e., along the profile form, and more preferably, all the way along the profile i.e. not only at the bend portion 5. In the preferred embodiment, the bend portion 5 can then be efficiently formed.

The flexible linear member 6 can prevent the residual lip portion 45 from tearing arising from handling the frame 1 or through aging of the glass unit 12. For that purpose, as a material of the flexible linear member 6, materials that show higher resistance to shear stress than the lip 4 may be used. From this viewpoint, textile, glass fiber, or metallic wire may suitably be used as the flexible linear or elongate member 6. A skilled person may select an appropriate material to provide a reinforcement cord or tensile reinforcement incorporated into the structure of the lip. The diameter or thickness of the flexible linear member 6 may be e.g. from 0.1 mm to 1 mm. The numerical values may be determined depending on thickness of the lip 4. It may be a monofilament or composite element.

In the residual lip portion 45, the distance between the edge of the lip 4 and the end (i.e. nodal line 7c between the first and second surfaces 7a, 7b) of the notch 7 may usually be from 1 mm to 7 mm. In the case of smaller than 1 mm, it can become difficult to produce such a structure. On the other hand, in the case of larger than 7 mm, at the state that the residual lip portion 45 is bent, wrinkles might generate at the portion. Considering these issues, this distance may more preferably be from 2 mm to 6 mm.

## Claims

1. A polymer profile frame (1) for a vehicle window unit (12), comprising:
a base portion (3),
a flexible lip (4) extending along and out from the base portion (3), and
at least one bend portion (5) to be applied at a corner portion of a window substrate (2),
wherein the bend portion (5) has a V-shaped notch (7) formed so as to extend completely through the base portion (3) and part-way through the flexible lip (4), thereby leaving a residual lip portion (45) adjacent the notch (7),
**characterised in that** the residual lip portion (45) comprises a flexible linear member (6) integrally molded within the residual lip portion (45).

2. A polymer profile frame according to claim 1 wherein in the residual lip portion (45) a distance between an edge of the lip (4) and an end of the notch (7) is 1 mm to 7 mm.

3. A polymer profile frame according to claim 1 or 2 wherein the flexible linear member (6) is a textile element, a glass fiber, or a metallic wire.

4. A polymer profile frame according to any one of the preceding claims, wherein the flexible linear member (6) is integrally molded within the edge portion of the lip so as to extend in the longitudinal direction of the lip.

5. A polymer profile frame according to claim 4, wherein the flexible linear member (6) is incorporated into the edge portion of the lip all along the profile frame (1).

6. A polymer profile frame according to any one of the preceding claims, wherein the base portion (3) comprises:
a first main surface (31),
a second main surface (32) opposed to the first main surface, the second main surface to be applied in use onto a surface of the window substrate, and
a rib (8) disposed on the first main surface (31) and extending along the base portion (3).

7. A polymer profile frame according to any one of the preceding claims, wherein a main surface (32) of the base portion provides an adhesion layer-receiving area for attachment to the window substrate.

8. A polymer profile frame according to any one of the preceding claims, wherein first and second surfaces (7a,b) defining a V-shape of the notch (7) respectively extend straight from a nodal line (7c) therebetween and respectively outwardly flex at a boundary between the base portion (3) and the flexible lip (4).

9. A vehicle window unit (12) comprising a glass substrate (2) and a polymer profile frame (1) according to any one of claims 1 to 8 applied on an edge portion of the glass substrate (2) which has at least one corner portion, with said at least one bend portion (5) of the profile frame applied to the corner portion of the glass substrate.

10. Vehicle window unit according to claim 9 wherein the window unit comprises an adhesion layer (9) between the glass substrate (2) and a surface of the base portion (3) of the profile frame (1), thereby attaching the profile frame to the glass substrate.

11. A method of making a window unit (12) of claim 9 or 10 comprising attaching the polymer profile frame (1) along the edge of the glass substrate (2) aligning the notch area with a corner portion of the substrate (2) and closing the V-shaped notch (7) together at the corner portion for the profile frame (1) to conform to the edge of the glass substrate (2).

12. Method of claim 11 in which the polymer profile frame (1) is attached along the edge of the glass substrate (2) by adhesive.

## Patentansprüche

1. Polymerprofilrahmen (1) für eine Fahrzeugfenstereinheit (12), umfassend:
einen Basisabschnitt (3),
eine flexible Lippe (4), die sich entlang des Basisabschnitts (3) und aus diesem heraus erstreckt, und
mindestens einen Biegungsabschnitt (5), der an einem Eckabschnitt eines Fenstersubstrats (2) aufzubringen ist,
wobei der Biegungsabschnitt (5) eine V-förmige Einkerbung (7) aufweist, die so ausgebildet ist, dass sie sich zur Gänze durch den Basisabschnitt (3) und zum Teil durch die flexible Lippe (4) hindurch erstreckt, wodurch ein restlicher Lippenabschnitt (45) angrenzend an die Einkerbung (7) bestehen bleibt,
**dadurch gekennzeichnet, dass** der restliche Lippenabschnitt (45) ein flexibles lineares Element (6) umfasst, das innerhalb des restlichen Lippenabschnitts (45) einstückig geformt ist.

2. Polymerprofilrahmen gemäß Anspruch 1, wobei in dem restlichen Lippenabschnitt (45) ein Abstand zwischen einer Kante der Lippe (4) und einem Ende der Einkerbung (7) 1 mm bis 7 mm beträgt.

3. Polymerprofilrahmen gemäß Anspruch 1 oder 2, wobei das flexible lineare Element (6) ein Texilelement, eine Glasfaser oder ein Metalldraht ist.

4. Polymerprofilrahmen gemäß einem der vorangegangenen Ansprüche, wobei das flexible lineare Element (6) innerhalb des Kantenabschnitts der Lippe einstückig geformt ist, sodass es sich in Längsrichtung der Lippe erstreckt.

5. Polymerprofilrahmen gemäß Anspruch 4, wobei das flexible lineare Element (6) im Kantenabschnitt den ganzen Profilrahmen (1) entlang integriert ist.

6. Polymerprofilrahmen gemäß einem der vorangegangenen Ansprüche, wobei der Basisabschnitt (3) Folgendes umfasst:
eine erste Hauptfläche (31),
eine der ersten Hauptfläche entgegengesetzte, zweite Hauptfläche (32), wobei die zweite Hauptfläche bei Verwendung auf eine Fläche des Fenstersubstrats aufzubringen ist, und
eine Rippe (8), die auf der ersten Hauptfläche (31) angeordnet ist und sich entlang des Basisabschnitts (3) erstreckt.

7. Polymerprofilrahmen gemäß einem der vorangegangenen Ansprüche, wobei eine Hauptfläche (32) des Basisabschnitts einen Haftschicht-Aufnahmebereich zum Anbringen am Fenstersubstrat bereitstellt.

8. Polymerprofilrahmen gemäß einem der vorangegangenen Ansprüche, wobei sich eine erste und eine zweite Fläche (7a,b), die jeweils eine V-Form der Einkerbung (7) definieren, direkt von einer Knotenlinie (7c) zwischen denselben erstrecken und sich jeweils in einem Grenzbereich zwischen dem Basisabschnitt (3) und der flexiblen Lippe (4) nach außen biegen.

9. Fahrzeugfenstereinheit (12), umfassend ein Glassubstrat (2) und einen Polymerprofilrahmen (1) gemäß einem der Ansprüche 1 bis 8, der auf einem Kantenabschnitt des Glassubstrats (2), das mindestens einen Eckabschnitt aufweist, aufgebracht ist, wobei der mindestens eine Biegungsabschnitt (5) des Profilrahmens auf den Eckabschnitt des Glassubstrats aufgebracht ist.

10. Fahrzeugfenstereinheit gemäß Anspruch 9, wobei die Fenstereinheit eine Haftschicht (9) zwischen dem Glassubstrat (2) und einer Fläche des Basisabschnitts (3) des Profilrahmens (1) umfasst, wodurch der Profilrahmen am Glassubstrat angebracht wird.

11. Verfahren zur Herstellung einer Fenstereinheit (12) nach Anspruch 9 oder 10, umfassend das Anbringen des Polymerprofilrahmens (1) entlang der Kante des Glassubstrats (2), wobei der Einkerbungsbereich mit einem Eckbereich des Substrats (2) fluchtend ausgerichtet wird, und Zusammenschließen der V-förmigen Einkerbung (7) am Eckbereich, sodass der Profilrahmen (1) mit der Kante des Glassubstrats (2) übereinstimmt.

12. Verfahren nach Anspruch 11, wobei der Polymerprofilrahmen (1) mittels Klebstoff entlang der Kante des Glassubstrats (2) angebracht wird.

## Revendications

1. Cadre profilé en polymère (1) pour une unité de fenêtre de véhicule (12), comprenant :
une partie de base (3),
une lèvre flexible (4) s'étendant le long et à l'extérieur de la partie de base (3),
et
au moins une partie coudée (5) à appliquer au niveau d'une partie de coin d'un substrat de fenêtre (2),
dans lequel la partie coudée (5) a une encoche en forme de V (7) formée de manière à s'étendre complètement à travers la partie de base (3) et partiellement à travers la lèvre flexible (4), en laissant ainsi une partie de lèvre résiduelle (45) adjacente à l'encoche (7),
**caractérisé en ce que** la partie de lèvre résiduelle (45) comprend un élément linéaire flexible (6) moulé d'un seul tenant dans la partie de lèvre résiduelle (45).

2. Cadre profilé en polymère selon la revendication 1, dans lequel dans la partie de lèvre résiduelle (45), une distance entre un bord de la lèvre (4) et une extrémité de l'encoche (7) est comprise entre 1 mm et 7 mm.

3. Cadre profilé en polymère selon la revendication 1 ou 2, dans lequel l'élément linéaire flexible (6) est un élément textile, une fibre de vitre ou un fil métallique.

4. Cadre profilé en polymère selon l'une quelconque des revendications précédentes, dans lequel l'élément linéaire flexible (6) est moulé d'un seul tenant dans la partie de bord de la lèvre de manière à s'étendre dans la direction longitudinale de la lèvre.

5. Cadre profilé en polymère selon la revendication 4, dans lequel l'élément linéaire flexible (6) est incorporé dans la partie de bord de la lèvre tout le long du cadre profilé (1).

6. Cadre profilé en polymère selon l'une quelconque des revendications précédentes,
dans lequel la partie de base (3) comprend :
une première surface principale (31),
une seconde surface principale (32) opposée à la première surface principale, la seconde surface principale devant être appliquée en cours d'utilisation sur une surface du substrat de fenêtre, et
une nervure (8) disposée sur la première surface principale (31) et s'étendant le long de la partie de base (3).

7. Cadre profilé en polymère selon l'une quelconque des revendications précédentes, dans lequel une surface principale (32) de la partie de base fournit une zone de réception de couche d'adhérence destinée à être fixée au substrat de fenêtre.

8. Cadre profilé en polymère selon l'une quelconque des revendications précédentes, dans lequel des première et seconde surfaces (7a, b) définissant une forme en V de l'encoche (7) s'étendent respectivement de manière rectiligne à partir d'une ligne nodale (7c) entre celles-ci et
fléchissent respectivement vers l'extérieur au niveau d'une limite entre la partie de base (3) et la lèvre flexible (4).

9. Unité de fenêtre de véhicule (12) comprenant un substrat de vitre (2) et un cadre profilé en polymère (1) selon l'une quelconque des revendications 1 à 8 appliquée sur une partie de bord du substrat de vitre (2) qui a au moins une partie de coin, ladite au moins une partie coudée (5) du cadre profilé étant appliquée à la partie de coin du substrat de vitre.

10. Fenêtre de véhicule selon la revendication 9, dans laquelle l'unité de fenêtre comprend une couche d'adhérence (9) entre le substrat de vitre (2) et une surface de la partie de base (3) du cadre profilé (1), en fixant ainsi le cadre profilé au substrat de vitre.

11. Procédé de fabrication d'une unité de fenêtre (12) selon la revendication 9 ou 10, comprenant les étapes consistant à
fixer le cadre profilé en polymère (1) le long du bord du substrat de vitre (2) en alignant la zone d'encoche avec une partie de coin du substrat (2), et fermer l'encoche en forme de V (7) au niveau de la partie de coin pour que le cadre profilé (1) se conforme au bord du substrat de vitre (2).

12. Procédé selon la revendication 11, dans lequel le cadre profilé en polymère (1) est fixé le long du bord du substrat de vitre (2) par un adhésif.
